# EUROPEAN PATENT APPLICATION

(11) **EP 4 759 642 A1**
(43) Date of publication of application: **17.06.2026**
(21) Application number: 24219922.2
(22) Date of filing: 13.12.2024
(51) Int. Cl.: B60R 21/231, B60R 21/235

(54) **AN INFLATABLE AIRBAG FORMING PART OF A VEHICLE SAFETY SYSTEM OR A WEARABLE, A METHOD OF PROVIDING SUCH AIRBAG, AND THE USE OF SUCH AIRBAG**

(71) Applicant: Autoliv Development AB, 447 83 Vårgårda (SE)
(72) Inventor: Kedzierski, Mateusz, 55-200 Olawa (PL); Majewska, Donata, 55-200 Olawa (PL); Gidzinski, Wojciech, 55-200 Olawa (PL); Wasilewska, Malgorzata, 55-200 Olawa (PL)
(74) Representative: AWA Sweden AB

(57) **Abstract**

An inflatable airbag (1; 1'; 1") forming part of a vehicle safety system or a wearable is provided. The airbag comprising a first wall (10) and a second wall (20) that are mutually joined along an outer perimeter (11, 21) to form a closed airbag. The first wall comprises a first wall portion (12) and a second wall portion (13), where a first edge portion (14) of the first wall portion (12) is joined to a first edge portion (15) of the second wall portion (13). The second wall (20) comprises a first wall portion (22) and a second wall portion (23), where a first edge portion (24) of the first wall portion (22) is joined to a first edge portion (25) of the second wall portion (23). The first edge portions of the first and second wall portions of the first wall each have a sub-portion (14a, 15a) having a convex extension. The first edge portions of the first and second wall portions of the second wall each have a sub-portion (24a, 25a) having a concave extension. Also, a method of providing such airbag is disclosed. The invention also refers to the use of such airbag.

## Description

### Technical field

The present invention relates to inflatable airbag forming part of a vehicle safety system or a wearable, a method of providing such airbag, and the use of such airbag in a vehicle or in a wearable.

### Technical background

Inflatable airbags of different types are well known as safety devices in vehicles and wearables. The airbags are typically formed by two layers of fabric that are joined to form a closed cavity which upon inflation is configured to be deployed and form an inflated three-dimensional bag with two or more bag sections. One typical example is an airbag that is connected to a side of a seat back, which upon inflation and deployment is configured to provide one bag section that restricts and protects the side of the occupant's body, including the head, during a sideward movement, and one bag section that protects the chest, head and face during a forward movement.

The airbag is typically provided with a plurality of tethers that force the three-dimensional bag with its bag sections into a desired shape to thereby better conform to the available space in the vehicle or to the body of a wearer of the wearable. The tethers are typically combined with a suitable pattern of seams that form communicating channels or pockets.

Another well-known way to force the inflated three-dimensional bag into a desired shape is to use what is often referred to as "bag-on-bag", where two or more airbags are interconnected. The airbags can be communicating with each other or be provided with their own inflators. The thus interconnected airbags are interconnected on their exterior sides with tethers that force the two or more airbags to form a certain three-dimensional configuration upon deployment.

Not only is it a skill to design the layers, seams and tethers as such, but it is also a skill to roll and/fold the flat airbag in a manner that allows it to quickly deploy into the desired three-dimensional shape in the event of an accident.

### Summary

It is an object of the present invention to provide an inflatable airbag having a design that allows it to inflate and form a three-dimensional airbag having two or more inflated bag sections that form an angle to each other.

Another object is to provide an inflatable airbag where the number of tethers may be reduced or even eliminated.

The inflatable airbag should be applicable no matter if it is intended to be used in a vehicle or in a wearable.

These and other objects will be apparent from the following summary, description and appended claims.

According to one aspect of the present invention, there is provided an inflatable airbag forming part of a vehicle safety system or a wearable,
the airbag comprising a first wall and a second wall that are mutually joined along an outer perimeter to form a closed airbag, wherein
the first wall comprises a first wall portion and a second wall portion, where a first edge portion of the first wall portion is joined to a first edge portion of the second wall portion;
the second wall comprises a first wall portion and a second wall portion, where a first edge portion of the first wall portion is joined to a first edge portion of the second wall portion;
the first edge portions of the first and second wall portions of the first wall each have a sub-portion having a convex extension, and
the first edge portions of the first and second wall portions of the second wall each have a sub-portion having a concave extension.

By the combination of features, an airbag is provided which upon inflation will be deployed to form a three-dimensional airbag having a two bag sections. One bag section will be defined by the first wall portions of the first and second walls respectively. The other bag section will be defined by the second wall portions of the first and second walls respectively. Hence, the first wall and the second wall are overlapping each other. As a consequence of the first and second wall portions on one of the two walls being joined along a joint in which two concave portions are joined, and the first and second wall portions on the other of the two walls being joined along a joint in which two convex portions are joined, a pre-strain is provided to the airbag where the two bag sections during inflation strive to move towards each other. This results in the effect of an inflated airbag having a bent configuration where the two bag sections will form an angle in view of each other which is less than 180 degrees. The concave edge portions will extend along the inner side of the bend, whereas the convex edge portions will extend along the outer side of the bend. The two bag sections will together form a L-shaped configuration. This allows the provision of an inflated airbag that provides protection from two different directions. The two directions depend on how the airbag is oriented. It can by way of example be a sideward protection in two different directions, or a sideward protection from a first side and a vertical protection from a second side.

As a non-limiting example, the airbag may be designed to be arranged in the near side of a seat back, where the airbag is configured to deploy and form one bag section that provides a sideward protection for the seated person's side, head and shoulder portion, and one bag section that provides a frontal protection to the head and face.

Accordingly, and in summary, by using convex and concave joints between adjacent wall portions in the two walls making up the airbag and its bag sections, it is made possible to provide a shaping of the three-dimensional inflated airbag into a bent configuration without the use of any internal tethers. To the degree it should be still necessary to use tethers, the number of tethers can be substantially reduced. This allows a simplified overall airbag design and also an overall reduced production cost.

The skilled person realises that the same principle is applicable in the event the airbag should comprise more than two bag sections. The more than two bag section may, depending on their mutual orientation, e.g. be arranged to form an U-shape upon inflation or be arranged to provide three bag sections that together delimit a "corner" where the bag sections can provide a sideward protection from two different directions sides and an additional protection in a third direction, such as from the top.

The first wall may accordingly comprise a third wall portion, wherein a second edge portion of one or both of the first or second wall portions is joined to an edge portion of the third wall portion; and the second wall may comprise a third wall portion, wherein a second edge portion of one or both of the first or second wall portions is joined to an edge portion of the third wall portion; where the second edge portions of one or both of the first and second wall portions of the first wall and the edge portion of the third wall portion of the first wall each have a sub-portion having a convex extension; and where the second edge portions of the first and second wall portions of the second wall and the edge portion of the third wall portion of the second wall each have a sub-portion having a concave extension.

By having the first and second walls each divided into three or more wall portions, an inflated airbag with three bag sections is provided that can give protection from at least three different directions. The directions depend on which edge portions are connected. If the three wall portions are connected one after the other, the bag sections of the inflated airbag may form a U-shape that provides a sideward protection from three different directions in one in the same plane (left side, right side and front/rear side). In another alternative, where the connected edges form an angle in view of each other, the resulting three bag sections of the inflated airbag may together delimit a "corner" where the bag sections by way of example can provide a sideward protection from two sides and an additional protection from above.

A length of the sub-portions having a convex extension may be the same as or exceed a length of the sub-portions having a concave extension. The concave edge portions will extend along the inner side of the resulting bend, whereas the convex edge portions will extend along the outer side of the bend. If the lengths are the same, a substantially 90-degree bend may be achieved between the bag sections. The larger length ratio between the convex extension and the concave extension, the smaller angle between the two bag sections.

The first wall portion of the first wall and the first wall portion of the second wall may be formed by a folded unitary piece of fabric. By using a folded piece of fabric, the work relating to cutting and joining during manufacturing may be reduced.

The airbag may comprise an inlet channel configured to allow an inflator to be connected to the airbag. Inflators and their connections to an airbag is well known in the art and is not further discussed.

The inlet channel may be arranged in an interface between the first wall portions of the first and second walls. The skilled person realises that the inlet channel with remained functionality may be arranged in other positions along the perimeter of the resulting airbag. The position depends by way of example on how and where the airbag is intended to be positioned and its intended deployment pattern.

The inlet channel may have an axial extension substantially in parallel with an axial extension of the first edge portions of the first and second walls.

According to another aspect, the invention refers to a method of providing an airbag to be used in a vehicle safety system or in a wearable, the method comprising the acts of:
providing a first wall portion and a second wall portion configured to form a first wall, the first and second wall portions having two opposing first edge portions, each having sub-portion having a convex extension;
joining the first and second wall portions along the opposing first edge portions to thereby form the first wall;
providing a first wall portion and a second wall portion configured to form a second wall, the first and second wall portions having two opposing first edge portions, each having a sub-portion having a concave extension;
joining the first and second wall portions along the opposing first edge portions to thereby form the second wall; and
joining the first and second walls along their respective perimeters to thereby form an airbag.

The joining may be made by sewing, adhesive bonding or welding. The type of joining method may e.g., depend on the type of fabric material. A combination of two or more joining methods may be used.

The inflatable airbag according to the invention, with its design and functionally, has been thoroughly discussed above. These arguments are equally applicable to the method of providing such inflatable airbag. Hence, reference is made to the above to avoid undue repetition.

The method is equally applicable in the event the first and second walls each should have a third wall portion that is to be joined to a second edge portion of one or both or the respective first and second wall portions, and where the second edge portions of the relevant wall portions to be joined have opposing concave sub-portions and convex sub-portions.

The first wall portion that is configured to form part of the first wall and the first wall portion that is configured to form part of the second wall may be formed as one unitary piece of fabric, wherein the method may further comprise the additional act of folding the unitary piece before joining the first and second walls along their respective perimeters.

The method may further comprise the act of connecting an inflator to an inlet channel that is formed between the joined first and second walls. The connection of an inflator to an airbag is as such well known in the art and is not further discussed.

According to yet another aspect, the invention refers to the use of an inflatable airbag according to any of claims 1-7 in a vehicle or in a wearable. The inflatable airbag according to the invention, with its design and functionally, has been thoroughly discussed above. These arguments are equally applicable to the use of such inflatable airbag in a vehicle or in a wearable. Hence, reference is made to the above to avoid undue repetition. The wearable may by way of example be a back-pack, a helmet, a harness, or a garment

Further objects and advantages of the present invention will be obvious to a person skilled in the art reading the detailed description given below describing different embodiments.

### Brief description of the drawings

The invention will be described in detail with reference to the drawings.
Fig. 1 discloses highly schematically an airbag in a non-inflated condition.
Fig. 2 discloses highly schematically the different wall portions of the airbag of Fig. 1.
Fig. 3 discloses highly schematically an inflated airbag.
Fig. 4 discloses highly schematically an inflated L-shaped airbag integrated in a vehicle seat.
Fig. 5 discloses highly schematically an inflated U-shaped airbag forming part of a wearable.
Fig. 6a discloses highly schematically an airbag in a non-inflated condition where each wall comprises three wall portions that are connected along two edge portions.
Fig. 6b discloses, highly schematically, how the airbag of Fig. 6a when inflated can provide a protection from three different directions.
Fig. 7 is a flow chart illustrating the method of forming an airbag.

### Detailed description

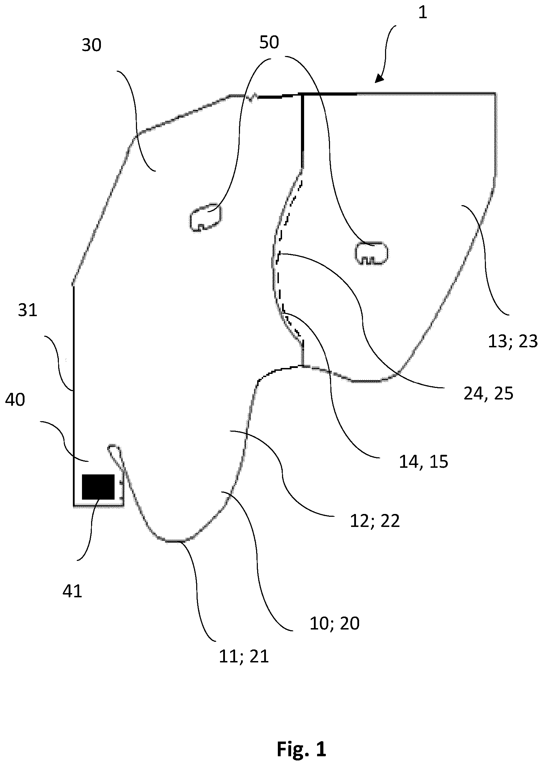

Now turning to Fig. 1, one embodiment of an inflatable airbag 1 according to the invention is disclosed. The airbag 1 is disclosed highly schematically in its flat, non-inflated condition. The airbag 1 comprises a first wall 10 and a second wall 20 that are mutually joined to each other along their respective outer perimeters 11, 21 to thereby form a closed airbag 1. The first walls 10, 20 are disclosed in an overlapping condition and have substantially the same shape.

The first wall 10 comprises a first wall portion 12 and a second wall portion 13. A first edge portion 14 of the first wall portion 12 is joined to an opposing first edge portion 15 of the second wall portion 13.

The second wall 20 comprises a first wall portion 22 and a second wall portion 23. A first edge portion 24 of the first wall portion 22 is joined to an opposing first edge portion 25 of the second wall portion 23.

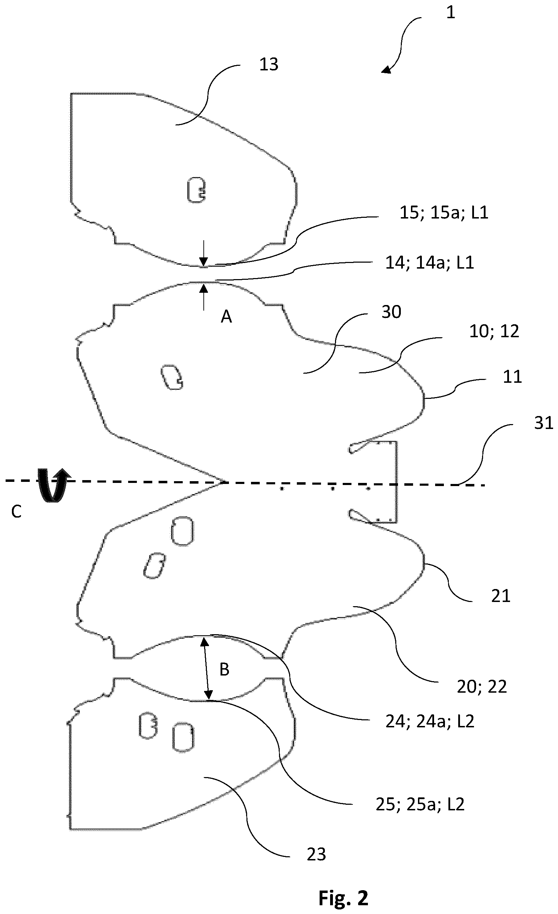

The first and second walls 10, 20 are partly formed as one unitary piece 30 that is folded along a folding line 31. This will be further described below with reference to Fig. 2.

The walls 10, 20 are made of a flexible textile material of the type that is typically used for airbags.

The airbag 1 further comprises an inlet channel 40. The inlet channel 40 is configured to allow an inflator 41 to be connected to the airbag 1. The inflator 41 may by way of example be arranged inside the inlet channel 40 although other positions are possible. Inflators and their connection to an airbag is well known in the art and is not further discussed.

The inlet channel 40 is disclosed as being arranged in an interface between the first and second walls 10, 20. The inlet channel 40 is also disclosed as having an axial extension substantially in parallel with the axial extension of the folding line 31. The inlet channel 40 is further disclosed as having an axial extension substantially in parallel with an axial extension of the opposing first edge portions 14, 15; 24, 25 of the first and second walls 10, 20. The skilled person realises that the inlet channel 40 with remained functionality may be arranged in other positions along the perimeter 11, 21 of the resulting airbag 1, and that it may have other extensions. The position depends by way of example on how and where the airbag is intended to be positioned and its intended deployment pattern.

The first and second walls 10, 20 are joined to each other along their perimeters 11, 21. The first and second walls 10, 20 may additionally be connected to each other in one or more local connection areas across the surfaces of the first and second walls 10, 20. The connection may be direct, or be indirect by means of a bridging tether (not illustrated). This kind of local connection areas may be used to force the inflated airbag into a certain configuration. This is all well known in the art and not further discussed.

The airbag may optionally be provided with one or more openings 50 across the surface area that allows a seat belt to be passed through. It goes without saying that the first and second walls 10, 20 are joined to each other along the perimeter of such opening(s).

Now turning to Fig. 2, the pieces making up the airbag 1 of Fig. 1 are disclosed. As given above, the first wall portions 12; 22 of the first and second walls 10, 20 are in the disclosed embodiment partly formed as one unitary piece 30 that is folded along the folding line 31. Hence, one part of the unitary piece 30 is configured to form the first wall portion 12 of the first wall 10, and one part of the unitary piece 30 is configured to form the first wall portion 22 of the second wall 20. The skilled person realises that the unitary piece 30 with remained functionality may be formed by two separate pieces that are configured to be joined. Any such joining is made along the line represented by the folding line 31.

The first wall portion 12 configured to form part of the first wall 10 is configured to be attached to a piece constituting a second wall portion 13 of the first wall 10. More precisely, a first edge portion 14 of the first wall portion 12 is configured to be joined to an opposing first edge portion 15 of the piece making up the second wall portion 13, see arrow A. The opposing first edge portions 14, 15 of the first and second wall portions 12, 13 of the first wall 10 do each have a sub-portion 14a, 15a having a convex extension.

The second wall portion 22 configured to form part of the second wall 20 is configured to be attached to a piece constituting a second wall portion 23 of the second wall 20. More precisely, a first edge portion 24 of the first wall portion 22 is configured to be joined to an opposing first edge portion 25 of the piece making up the second wall portion 23, see arrow B. The opposing first edge portions 24, 25 of the first and second wall portions 22, 23 of the second wall 20 do each have a sub-portion 24a, 25a having a concave extension.

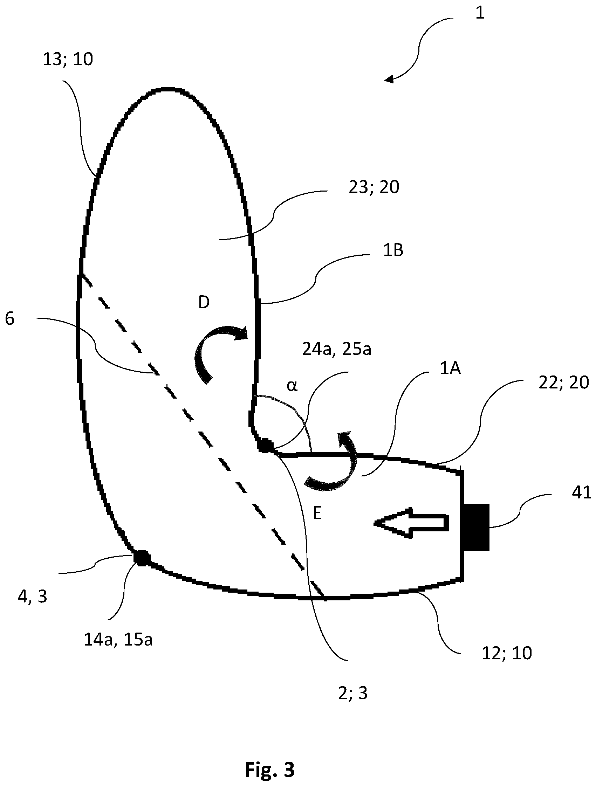

A length L1 of the sub-portions 14a, 15a having a convex extension may be the same as a length L2 of the sub-portions 24a, 24b having a concave extension. This will provide a substantially 90-degree bend between the bag sections when the airbag is inflated. As will be seen below with reference to Fig. 3, the concave sub-portions 24a, 25a will, as seen in a condition when the airbag 1 is inflated, extend along an inner side 2 of a resulting bend 3 of the airbag 1, whereas the convex sub-portions 14a, 15a will extend along an outer side 4 of the bend 3.

It is also to be understood that the length L1 of the sub-portions 14a, 15a having a convex extension may exceed the length L2 of the sub-portions 24a, 24b having a concave extension. The larger length ratio between the length L1 of the convex sub-portions 14a, 15a and the length L2 of the concave sub-portion 24a, 25a, the smaller angle α between the two bag sections 5, 6 of the inflated airbag 1.

Now turning to Fig. 2 anew. When the respective convex edge portions 14, 15 have been joined to each other and the respective concave edge portions 24a, 25a have been joined to each other, the resulting piece of fabric is folded, see arrow C, along the folding line 31 so that the resulting first and second walls 10, 20 will overlap each other. As a next step, the first and second walls 10, 20 are joined to each other along the resulting outer perimeters 11, 21 to thereby form the airbag 1. It is to be stressed that the joints between the concave and convex sub-portions are disclosed highly schematically since these in practice will not form any naturally flat portions.

The joining, no matter along which edge, may be made by sewing, adhesive bonding or welding. The type of joining method may e.g., depend on the type of fabric material. A combination of two or more joining methods may be used.

Now turning to Fig. 3, one highly schematically disclosed embodiment of an inflated L-shaped airbag 1 is provided. The airbag 1 is inflated by an inflator 41. The airbag 1 has, as seen in its non-inflated condition, a design of the type that is described above with reference to Fig. 1 and Fig. 2. By the combination of features, an airbag 1 is provided which upon inflation will be deployed to form a three-dimensional airbag 1 having a two bag sections 1A, 1B. One bag section 1A will be defined by the first wall portions 12, 22 of the first and second walls 10, 20 respectively. The other bag section 1B will be defined by the second wall portions 13, 23 of the first and second walls 10, 20 respectively. As a result of the first and second wall portions 22, 23 on the second wall 20 being joined along two concave sub-portions 24a, 25a, and the first and second wall portions 12, 13 on the first wall 10 being joined along two convex sub-portions 14a, 15a, a pre-strain is provided to the airbag 1 where the two bag sections 1A, 1B during inflation strive to move towards each other, see arrows D and E. This results in the effect of a three-dimensional inflated airbag 1 having a bent configuration where the two bag sections 1A, 1B will form an angle α in view of each other that is less than 180 degrees. The concave sub-portions 24a, 25a will, as seen in a condition when the airbag 1 is inflated, extend along an inner side 2 of a resulting bend 3 of the airbag 1, whereas the convex sub-portions 14a, 15a will extend along an outer side 4 of the bend 3.

The bending can be assisted by one or more tethers. One tether 6 is disclosed highly schematically.

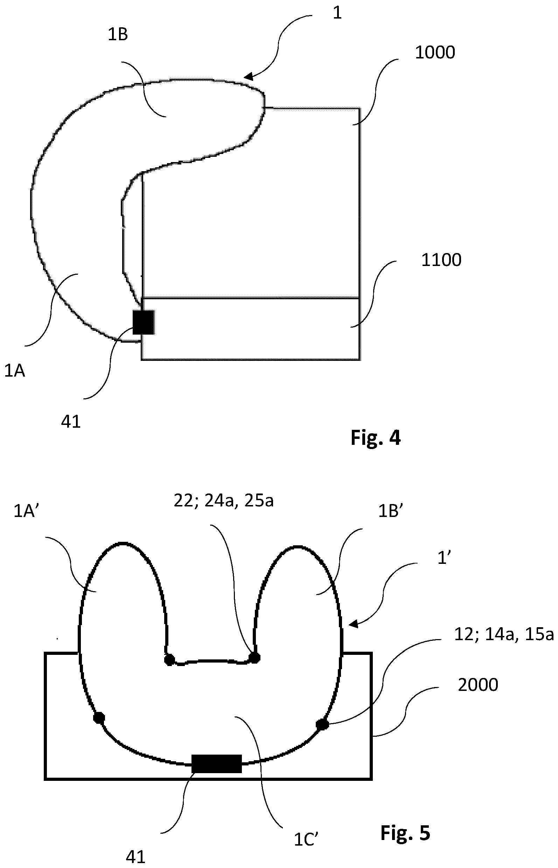

As a non-limiting example, see Fig. 4, the airbag 1 may be designed to be arranged in the near side of a seat back 1100 of a vehicle seat 1000, i.e. closest to the side door of a vehicle, where the airbag 1 is configured to deploy and form one bag section 1A that provides a sideward protection for the seated person's side, head and shoulder portion, and one bag section 1B that provides a frontal protection for the head and face. The airbag 1 connects to an inflator 41.

It is to be understood that a corresponding airbag may be designed to be arranged in the far side of the seat back of the vehicle seat, i.e. farthest away from the side door, where the airbag is configured to deploy and form a sideward protection and a sideward protection. It is also to be understood that the seat can be provided with such airbags on its two opposing sides. The airbag(s) can be provided with a seat belt arrangement that extends through the openings 50 (see Fig. 1) in the airbag(s). This allows the airbag to form part of system that is known as SCRC (Seat Centric Restrain System)

As another non-limiting example, see Fig. 5, the airbag 1' may be designed to be arranged in a wearable 2000. The wearable 2000 is schematically disclosed as a backpack with an inflated airbag 1' that forms a U-shaped collar configured to encircle the wearer's neck/head (omitted). The airbag 1' connects to a centrally arranged inflator 41. The airbag 1' uses the very same principle as has been described above with reference to Figs. 1-4. The airbag 1' differs from the previously described airbag 1 in that it comprises three bag sections: a central bag section 1C' which in its opposing ends connects to a respective bag section 1A' and 1B'. The interface between the central bag section 1C' and the two bag sections 1A' and 1B' is the same as has been described above where one of the two side walls 12 comprises two joined convex sub-portions 14a, 15a and the other of the two side walls 22 comprises two joined concave sub-portions 24a, 25a.

Although the wearable 2000 has been exemplified as a back-pack, it is to be understood the wearable in other applications may be e.g., a helmet, a harness, or a garment.

The skilled person realizes that the very same principle can be applied to any other configuration of an airbag. The bag sections have above been described as bending in two dimensions, i.e., to provide a sideward protection from two sides, such as from two opposing sides or from one side and from the front or the back. The principle is equally applicable to provide an airbag with three or more bag sections that bend in three dimensions such as from the side, from the front and from the top. This may be useful in by way of example a wearable or in a child seat.

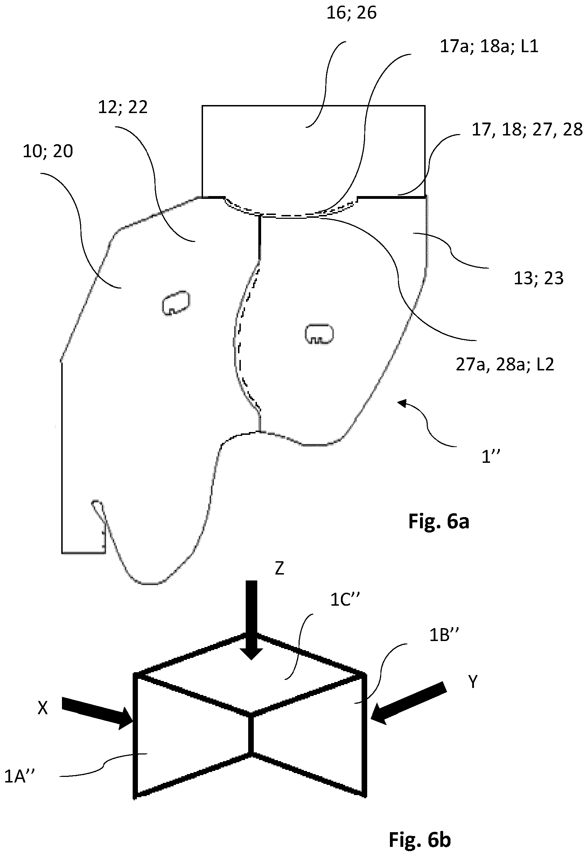

Now turning to Fig. 6a, a highly schematic illustration of an airbag 1" in its non-inflated condition is provided. The inflator is omitted.

The airbag 1" differs from the airbag that has been previously described in that the first and second walls 10, 20 each is composed by three wall portions 12, 13, 16; 22, 23, 26. The first and second walls 10, 20 are disclosed in an overlapping condition. The first and second wall portions 12, 13; 22, 23 are connected in the same manner as has been described above with reference to Figs. 1 and 2. The third wall portion 16 of the first wall 10 is connected to both the first and second wall portions 12, 13 of the first wall 10 along a second edge portion 17. Correspondingly, the third wall portion 26 of the second wall 20 is connected to both the first and second wall portions 22, 23 of the second wall 20 along a second edge portion 18.

It is to be understood that the third wall portion 16, 26 may connect to one of the first and second wall portions 12, 13; 22, 23 only.

The second edge portions 17 of both the first and second wall portions 12, 13 of the first wall 10 and the edge portion 18 of the third wall portion 16 of the first wall 10 each have a sub-portion 17a, 18a having a convex extension. Correspondingly, the second edge portions 27 of the first and second wall portions 22, 23 of the second wall 20 and the edge portion 28 of the third wall portion 26 of the second wall 20 each have a sub-portion 27a, 28a having a concave extension.

Turning to Fig. 6b, as the airbag 1" inflates, three bag sections 1A", 1B", 1C", highly schematically disclosed, will be formed that together define a corner that provides a protection from three different sides X, Y, Z. This can be seen as one example of a life cell.

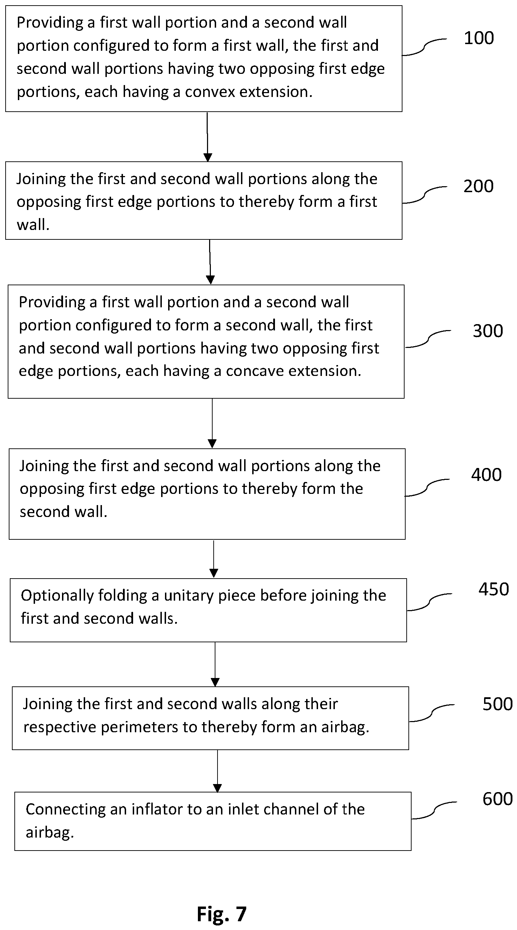

Fig. 7 discloses a flow chart showing the method of providing an airbag 1; 1' of Figs. 1-5 to be used in a vehicle safety system or in a wearable. The method is equally applicable to a method of providing the airbag 1" of Figs. 6a and 6b.

The method comprises the following acts:
Providing 100 a first wall portion 12 and a second wall portion 13 configured to form a first wall 10. The first and second wall portions 12, 13 have two opposing first edge portions 14, 15, each having a sub-portion 14a, 15a with a convex extension.

Joining 200 the first and second wall portions 12, 13 along the opposing first edge portions 14, 15 to thereby form a first wall 10.

Providing 300 a first wall portion 22 and a second wall portion 23 configured to form a second wall 20. The first and second wall portions 22, 23 have two opposing first edge portions 24, 25, each having a sub-portion 24a, 25a with a concave extension.

Joining 400 the first and second wall portions 22, 23 along the opposing first edge portions 24, 25 to thereby form the second wall 20.

Joining 500 the first and second walls 10, 20 along their respective perimeters 11, 21 to thereby form an airbag 1; 1'.

The joining of the different wall portions 12, 13; 22, 23 may be made by sewing, adhesive bonding or welding. The type of joining method depends on the type of fabric material. A combination of two or more joining methods may be used.

The first wall portion 12 that is configured to form part of the first wall 10 and the first wall portion 22 that is configured to form part of the second wall 20 may be formed as one unitary piece 30 of fabric. Should that be the case, the method may further comprise the additional act of folding 450 the unitary piece 30 before joining the first and second walls 10, 20 along their respective perimeters 11, 21. By using a folded piece of fabric, the work relating to cutting and joining during manufacturing may be reduced.

The method may further comprise the act of connecting 600 an inflator 41 to an inlet channel 40 that is formed between the joined first and second walls 10, 20. The connection of an inflator 41 to an airbag 1, 1' is as such well known in the art and is not further discussed.

Accordingly, and in summary, by using convex and concave joints between adjacent wall portions in the two walls making up the airbag, it is made possible to provide a shaping of the three-dimensional inflated airbag into a bent configuration without the use of any internal tethers. To the degree it should be still necessary to use tethers, the number of tethers may be substantially reduced. This allows a simplified overall airbag design and an overall reduced production cost.

The skilled person realizes that the inflatable airbag with its overall geometry, size and features described above may differ depending on the intended use and intended position in the vehicle or wearable. Also, the skilled person realizes that the vehicle as such may be any type of vehicle. Also, the skilled person realizes that the wearable as such may be any type of wearable.

It is realized by a person skilled in the art that features from various embodiments disclosed herein may be combined with one another to provide further alternative embodiments.

## Claims

1. An inflatable airbag (1; 1'; 1") forming part of a vehicle safety system or a wearable, the airbag comprising a first wall (10) and a second wall (20) that are mutually joined along an outer perimeter (11, 21) to form a closed airbag, wherein
the first wall (10) comprises a first wall portion (12) and a second wall portion (13), where a first edge portion (14) of the first wall portion (12) is joined to a first edge portion (15) of the second wall portion (13);
the second wall (20) comprises a first wall portion (22) and a second wall portion (23), where a first edge portion (24) of the first wall portion (22) is joined to a first edge portion (25) of the second wall portion (23);
the first edge portions (14, 15) of the first and second wall portions (12, 13) of the first wall (10) each have a sub-portion (14a, 15a) having a convex extension, and
the first edge portions (24, 25) of the first and second wall portions (22, 23) of the second wall (20) each have a sub-portion (24a, 25a) having a concave extension.

2. The inflatable airbag according to claim 1, wherein
the first wall (10) comprises a third wall portion (16), wherein a second edge portion (17) of one or both of the first or second wall portions (12, 13) is joined to an edge portion (18) of the third wall portion (16);
the second wall (20) comprises a third wall portion (26), wherein a second edge portion (27) of one or both of the first or second wall portions (22, 23) is joined to an edge portion (28) of the third wall portion (26);
the second edge portions (17) of one or both of the first and second wall portions (12, 13) of the first wall (10) and the edge portion (18) of the third wall portion (16) of the first wall (10) each have a sub-portion (17a, 18a) having a convex extension; and
the second edge portions (27) of the first and second wall portions (22, 23) of the second wall (20) and the edge portion (28) of the third wall portion (26) of the second wall (20) each have a sub-portion (27a, 28a) having a concave extension.

3. The inflatable airbag according to claim 1 or 2, wherein a length (L1) of the sub-portions (14a, 15a; 17a, 18a) having a convex extension is the same as, or exceeds a length (L2) of the sub-portions (24a, 25a; 27a, 28a) having a concave extension.

4. The inflatable airbag according to any of the preceding claims, wherein
the first wall portion (12) of the first wall (10) and the first wall portion (22) of the second wall (20) are formed by a folded unitary piece (30) of fabric.

5. The inflatable airbag according to any of the preceding claims, wherein
the airbag (1; 1'; 1") comprises an inlet channel (40) configured to allow an inflator (41) to be connected to the airbag (1; 1'; 1").

6. The inflatable airbag according to claim 5, wherein the inlet channel (40) is arranged in an interface between the first wall portions (12, 22) of the first and second walls (10, 20).

7. The inflatable airbag according to claim 5, wherein the inlet channel (40) has an axial extension substantially in parallel with an axial extension of the folding line (31).

8. A method of providing an airbag (1; 1'; 1") to be used in a vehicle safety system or in a wearable, the method comprising the acts of:
providing a first wall portion (12) and a second wall portion (13) configured to form a first wall (10), the first and second wall portions (12, 13) having two opposing first edge portions (14, 15), each having a sub-portion (14a, 15a) having a convex extension;
joining the first and second wall portions (12, 13) along the opposing first edge portions (14, 15) to thereby form the first wall (10);
providing a first wall portion (22) and a second wall portion (23) configured to form a second wall (20), the first and second wall portions (22, 23) having two opposing first edge portions (24, 25), each having a sub-portion (24a, 25a) having a concave extension;
joining the first and second wall portions (22, 23) along the opposing first edge portions (24, 25) to thereby form the second wall (20); and
joining the first and second walls (10, 20) along their respective perimeters (11, 21) to thereby form an airbag (1; 1'; 1").

9. The method of claim 8, wherein the first wall portion (12) configured to form part of the first wall (10) and the first wall portion (22) configured to form part of the second wall (20) are formed as one unitary piece (30) of fabric, wherein the method further comprises the additional act of folding the unitary piece (30) before joining the first and second walls (10, 20) along their respective perimeters (11, 21).

10. The method of claim 8 or 9, wherein the method further comprises the act of connecting an inflator (41) to an inlet channel (40) that is formed between the joined first and second walls (10, 20).

11. Use of an inflatable airbag (1; 1'; 1") according to any of claims 1-7 in a vehicle or in a wearable.
